# EUROPEAN PATENT SPECIFICATION

(11) **EP 0 306 316 B1**
(45) Date of publication and mention of the grant of the patent: **10.02.1993**
(21) Application number: 88308122.6
(22) Date of filing: 01.09.1988
(51) Int. Cl.: G11B 7/24

(54) **Methods of forming protective films on optical recording media**
Verfahren zur Herstellung von Schutzschichten auf optischen Aufzeichnungsmedien
Procédés de formation de chouches protectrices sur des milieux d'enregistrement optique

(30) Priority: 03.09.1987 JP 221082/87
(43) Date of publication of application: 08.03.1989
(73) Proprietor: SONY CORPORATION, Tokyo 141 (JP)
(72) Inventor: Arakawa, Nobuyuki Patents Division, Shinagawa-ku Tokyo 141 (JP); Suzuki, Hirotsugu Patents Division, Shinagawa-ku Tokyo 141 (JP); Nishihara, Tokihiro Patents Division, Shinagawa-ku Tokyo 141 (JP)
(74) Representative: Pilch, Adam John Michael

(56) References cited:
- DE-A- 2 653 831
- DE-A- 3 425 606
- US-A- 4 479 432

## Description

This invention relates to methods of forming protective films on optical recording media such as compact discs (CDs), video discs or magneto-optical recording discs.

In manufacturing an optical recording medium such as a compact disc (CD), small holes or depressions serving as information pits are formed in at least one surface of a substrate, for example, a transparent substrate formed of polymethyl methacrylate resin (PMMA) or polycarbonate resin (PC), during moulding of the substrate, an evaporated metallic film serving as a reflective film or recording layer is formed over the surface having the information pits, and a protective film having a thickness in the range of several microns to several tens of microns and formed of a transparent resin, such as an ultraviolet curable resin or lacquer, is formed over the evaporated metallic film.

The substrate having the information pits is formed by a stamping process using a stamper having protrusions corresponding to the information pits by an injection moulding process using the same stamper disposed in a mould, or by a so-called 2P process (photopolymerisation process) in which an ultraviolet curable resin is filled into a space between a flat resin plate having good optical characteristics and a stamper, and then the ultraviolet curable resin is irradiated by ultraviolet radiation to cure the resin.

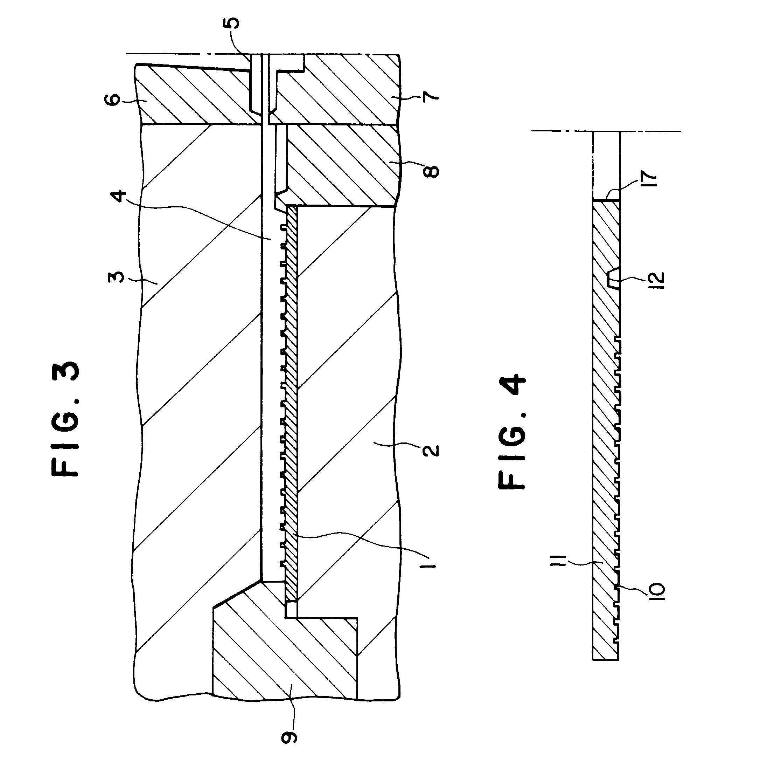

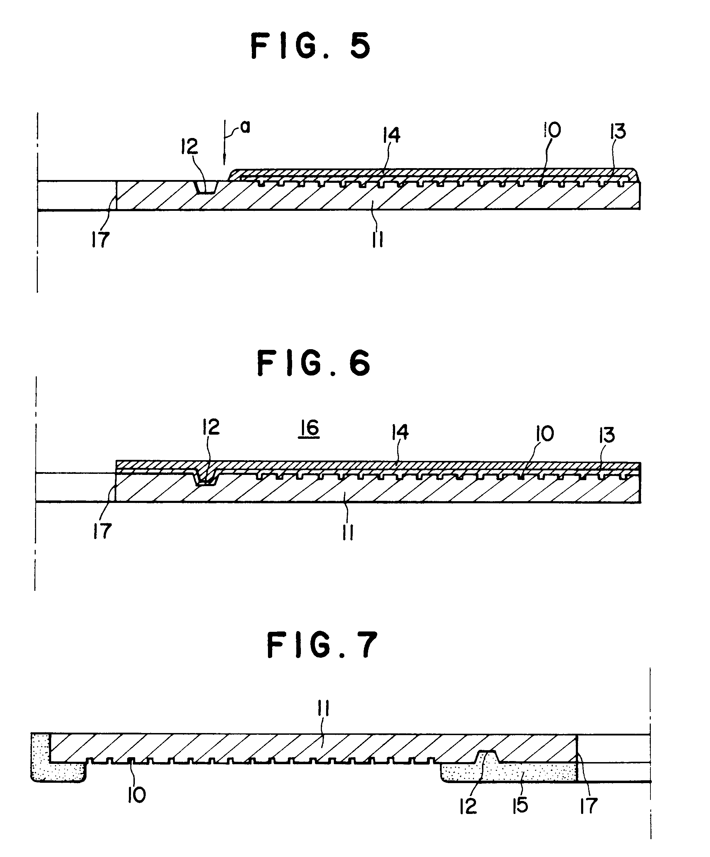

Generally, the protective film is formed by a spin-coating method. However, such a spin-coating method involves various problems. For example, as shown in Figure 3 of the accompanying drawings, in forming the substrate by an injection moulding process, a stamper 1 having a surface carrying a pattern of pits complementing the desired pattern of information pits is placed on a movable mould 2, a fixed mould 3 is held over the movable mould 2 so as to form a cavity 4 between the movable mould 2 and the fixed mould 3, and then a resin is injected through a sprue 5 into the cavity 4. A die 6 and a punch 7 are provided for forming a central hole in the substrate being formed. The stamper 1 is held along its inner and outer peripheries by stamper holders 8 and 9, and an annular groove 12, as shown in Figure 4 of the accompanying drawings, corresponding to the stamper holder 8, is formed in the moulded substrate 11 having information pits 10 corresponding to the surface pattern protrusions of the stamper 1. Then, as shown in Figure 5 or Figure 6 of the accompanying drawings, a reflective film or a recording layer 13, such as an aluminium film formed by vacuum evaporation, having a thickness in the range of 6 x 10⁻⁸ m to 15 x 10⁻⁸ m (600Å to 1500Å) is formed over the surface having the information pits 10 of the substrate 11, and then a protective film 14 is formed over the recording layer 13 to complete the optical recording medium, for example, a CD 16 having a central hole 17.

In forming the protective layer 14 of the CD having a construction as shown in Figure 5, the outer peripheral region and the inner peripheral region including the annular groove 12 of the substrate 11 are covered selectively with a mask 15 as shown in Figure 7 of the accompanying drawings, by way of example, the recording layer 13 is formed selectively in the region in which the information pits 10 are formed, for example, by an aluminium evaporation process, the mask 15 is removed, and then the substrate 11 is rotated and an ultraviolet curable resin, for example, is deposited on the substrate 11 at a position indicated by an arrow a in Figure 5, namely, a position radially outside the annular groove 12 and radially inside the region in which the recording layer 13 is formed, so as to form the protective film 14. Since the protective film 14 is formed over the entire surface of the recording layer 13 including its circumference, the recording layer 13 can be protected effectively. However, as mentioned above with reference to Figure 7, complex manufacturing steps are required for forming and removing the mask 15, which is an obstacle to mass production.

On the other hand, in forming the protective film 14 of the CD having a construction as shown in Figure 6, the reflective film or the recording layer 13 is formed over the entire region having the information pits 10 of the substrate 11 including the annular groove 12, for example, by an aluminium evaporation process without using any mask 15, and then the protective film 14 is formed similarly over the entire region having the information pits 10 by a spin-coating process. In this case, the troublesome work and complex steps for forming and removing the mask 15 are avoided. However, radial irregularities appear in the protective film 14 in a region outside the annular groove 12 due to the adverse effect of the annular groove 12, entailing degradation of the commercial value, and the edges of the recording layer 13 are not covered by the protective film 14, which results in the erosion of the recording layer 13 from the edges.

According to the present invention there is a method of forming a protective film on an optical recording medium, the method comprising the steps of:
applying a protective film forming ink having a viscosity in a range of 0.09 to 10 Pa.s to a pad having a Shore A hardness in the range of 8 to 30; and
pressing the pad against a substrate to transfer the protective film forming ink to the substrate thereby forming the protective film.

A preferred embodiment of the present invention, to be described in greater detail hereinafter, provides a method of forming a protective film for an optical recording medium in which a reflective film or recording layer is effectively covered by the protective film.

A protective film forming method according to the preferred embodiment is suitable for mass production of the optical recording medium with a simplified process.

The invention will now be described by way of example with reference to the accompanying drawings, throughout which like parts are referred to by like references, and in which:
Figures 1A to 1E are schematic illustrations for explaining the steps of a method of forming a protective film for an optical recording medium according to a preferred embodiment of the present invention;
Figures 2A₁, 2A₂, 2B and 2C are schematic illustrations for explaining one way of applying a protective film forming ink to a pad;
Figure 3 is a sectional view of an arrangement for forming a substrate of an optical recording medium;
Figure 4 is a sectional view of half a substrate, such as may be produced by the arrangement of Figure 3;
Figures 5 and 6 are sectional views of respective optical recording media, in each of which only half the optical recording medium is shown; and
Figure 7 is a sectional view for explaining a previously-proposed method of forming a protective film for an optical recording medium.

In accordance with a preferred embodiment of the present invention, a protective film is formed over the surface of a substrate by applying a protective film forming ink having a viscosity in the range of 0.09 to 10 Pa.s (0.9 to 100 poise), preferably 1 to 5 Pa.s (10 to 50 poise), to the surface of a pad, such as a bulged pad or a roller pad, having a Shore A hardness in the range of 8 to 30, and by pressing the pad against the substrate to transfer the protective film forming ink on the substrate.

Although the method embodying the present invention finishes the protective film with a matte surface, the protective film formed by this method is free of imperfections, such as pinholes and irregularities, and is uniform. The reproducibility of the protective film formed by this method proved satisfactory.

The present invention will now be explained in detail with reference to specific embodiments described in the following examples.

### Example 1

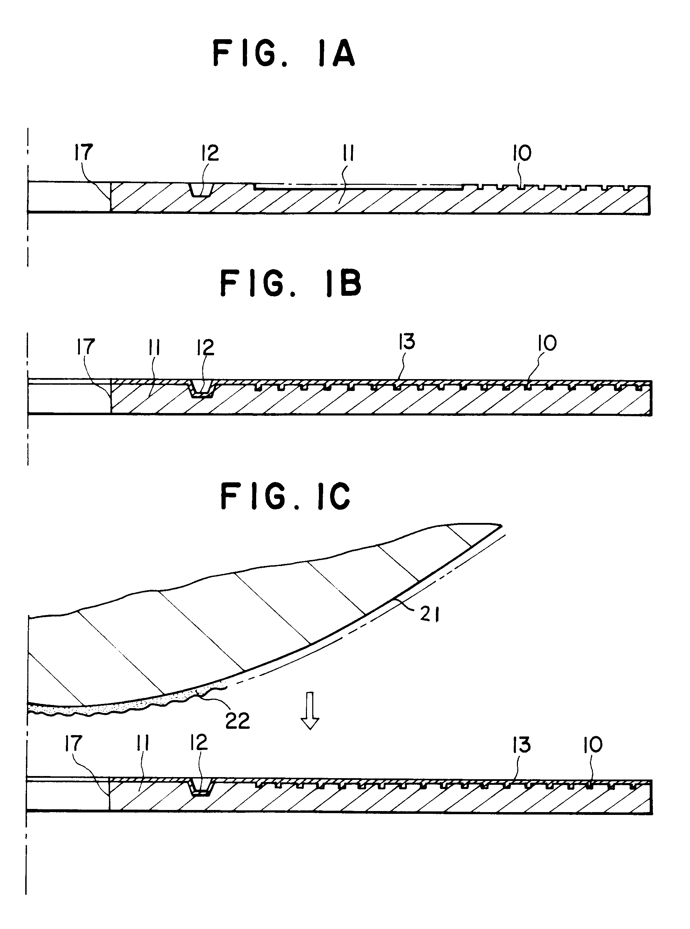

A first embodiment of the present invention will be described with reference to Figures 1A to 1E, in which parts similar or corresponding to those previously described with reference to Figure 4 are denoted by the same reference numerals, the description of which will be omitted. A transparent substrate 11 having information pits as shown in Figure 1A formed PMMA or PC by the foregoing known technique, such as the method described with reference to Figure 3, is used.

Then, as shown in Figure 1B, a reflective film or a recording layer 13 having a thickness in the range of 6 x 10⁻⁸ m to 15 x 10⁻⁸ m (600Å to 1500Å) is formed over the entire region having information pits 10 in the surface of the substrate 11, for example, by an aluminium evaporation process.

A protective film forming ink 22 is applied to the printing surface of a printing pad 21, for example, a bulged printing pad, as shown in Figure 1C.

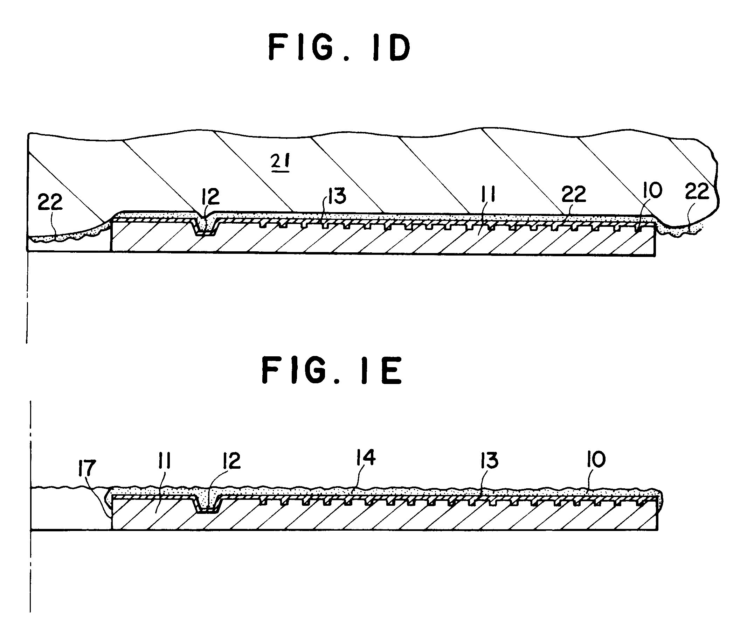

As shown in Figure 1D, the printing pad 21 is moved, relative to the substrate 11, towards the substrate 11 and is pressed against the substrate 11 to transfer the ink 22 on the entire surface of the substrate 11.

The layer of the ink 22 thus formed over the entire region having the information pits 10 in the surface of the substate is hardened, for example, by ultraviolet irradiation to form a protective film 14, as shown in Figure 1E. Since the pad 21 is elastically flexible, the pad 21 deforms when pressed against the substrate 11 so as to extend over the outer circumference of the substrate 11 and into the central hole 17, so that the outer circumference of the reflective film or the recording layer 13 and the inner circumference of the substrate 11 defining the central hole 17 are coated with the protective film 14.

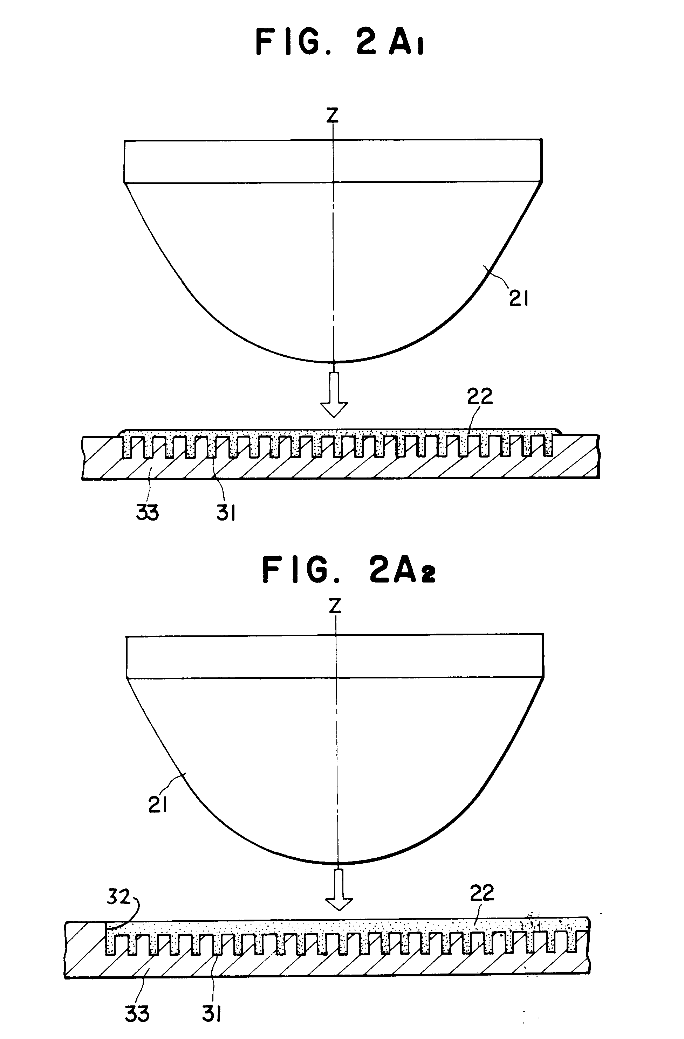

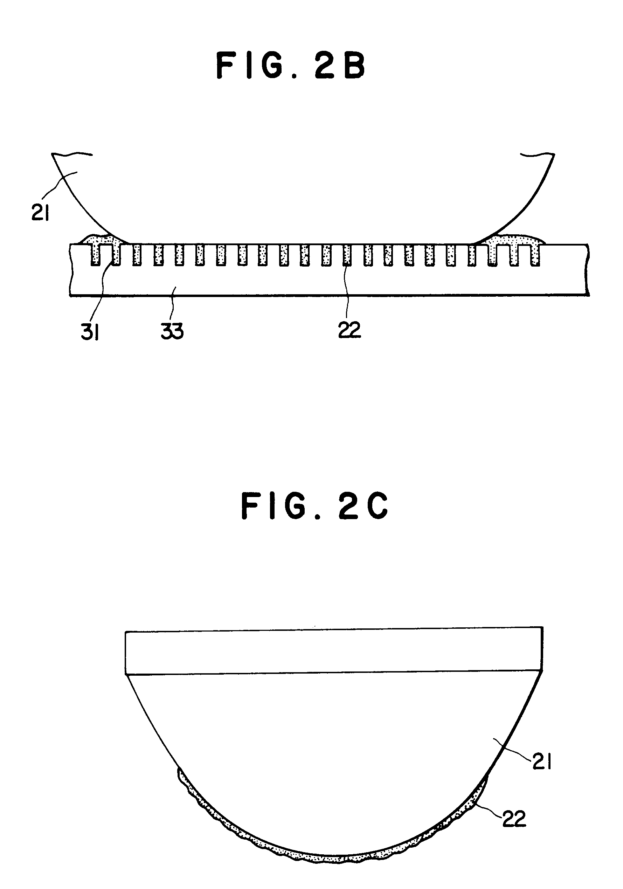

The pad 21 is formed, for example, of a RTV (room temperature vulcanized) silicone resin having a Shore A hardness in the range of 8 to 30 in a spindle-shape rotationally symmetric with respect to an axis Z or in a hemispherical shape, as shown in Figures 2A₁ and 2A₂. The ink has a viscosity in the range of 0.09 to 10 Pa.s (0.9 to 100 poise). The ink is applied to the pad 21 by using, for example, a plate 33 provided with minute pits 31 having a depth in the range of 25 to 35 µm distributed in a density in the order of 100 mesh (95% in aperture ratio) as shown in Figure 2A₁, or a plate 33 provided with the same minute pits 31 distributed in the same density in the bottom surface of a recess 32 as shown in Figure 2A₂. The protective film forming ink 22 is squeezed out from an ink tank to fill up the minute pits 31 of the plate 33 of Figure 2A₁ or the minute pits 31 and the recess 32 of the plate 33 of Figure 2A₂, and the excessive protective film forming ink 22 is scraped off, for example, with a doctor blade. Then, as shown in Figure 2B, the printing pad 21 is pressed against the plate 33 of Figure 2A₁ or Figure 2A₂ to transfer the ink 22 applied to the plate 33 to the printing surface of the pad 21 as shown in Figure 2C. Then, the pad 21 coated with the ink 22 is pressed against the substrate 11 as mentioned with reference to Figure 1D to transfer the ink 22 to the substrate 11.

The protective film forming ink 22 is prepared in an appropriate viscosity by mixing a photosetting oligomer or polymer preferably having at least two acrylic double bonds in a single molecule, such as epoxy acrylate, polyester acrylate or epoxy urethane acrylate, and, if necessary, a diluent, such as 2-hydroxyethyl (meta)acrylate, trimethylolpropane tri(meta)acrylate, pentaerythritol tetra(meta)acrylate or ethylene glycol di(meta)acrylate of a radiation curable monomer having acrylic double bonds, and then adding a radical initiator, such as benzoin ethyl ether, diacetyl benzoin to the mixture to initiate photopolymerisation.

A protective film forming ink 22 (ultraviolet curable resin coating: "Raycure 4100" (trade mark), Jujo Kako KK) having a viscosity of 4 Pa.s (40 poise) was applied to a substrate 11 at a transfer speed of 3 s by a rotationally symmetric printing pad 21 of a paraboloidal shape having an axis Z of symmetry, formed of a silicone resin in a Shore A hardness in the range of 19 to 20, according to the method described with reference to Figures 1A to 1E. Then, the film of the protective film forming ink 22 was irradiated by ultraviolet radiation by means of a high-pressure mercury-vapour lamp to form the protective film 14.

The adhesive strength of the protective film 14 thus formed was measured. In measuring the adhesive strength, a pressure-sensitive adhesive tape of 15 mm in width was applied to the protective film 14, and then the pressure-sensitive adhesive tape was peeled off by pulling it back. The protective film 14 did not peel off when the peeling force was 300 g, while a protective film formed by a previously-proposed spin-coating method was peeled off by a peeling force in order of 70 to 80 g.

### Comparative Example

A protective film was formed as a comparison by the same process as that of the first embodiment, except that the viscosity of the protective film forming ink 22 was 0.03 Pa.s (30 centipoise).

When the protective film forming ink 22 was transferred on to the substrate 11 by the printing pad 21, the ink cohered to form an uneven protective film.

Although the bulged pad 21 was used for transferring the protective film forming ink 22 on the substrate 11 in the foregoing examples, the protective film forming ink 22 may instead be transferred on to the substrate 11 by rolling a roller pad, such as that employed in rotary printing, relative to the substrate 11. Another embodiment employing such a roller pad will be described hereinafter.

### Example 2

A roller pad of 120 mm in outside diameter formed of a RTV silicone resin having a Shore A hardness in the range of 13 to 15 was used. The roller pad was rotated at 53 rpm and at a relative speed of 20 m/min relative to a substrate 11 to apply "Raycure 4100" (trade mark) (Jujo Kako KK) in a thickness in the range of 10 to 15µm. A protective film 14 of uniform thickness was formed.

It has been shown that the method embodying the present invention is capable of forming a protective film 14 having a matte surface and free from imperfections without using any mask over the entire surface of a region having information pits 10 in the surface of a substate 11 including the outer and inner circumferences of a relative film or a recording layer 13 and an annular groove 12 of, for example, a depth in order of 0.3 mm. Thus, the reflective film or the recording layer 13 formed of aluminium or the like is covered perfectly and is protected from corrosion by the moisture resistance of the protective film 14, which enhances the reliability of the optical recording medium.

In practicing the method embodying the present invention, it was shown that the ink 22 can properly be transferred from the pad 21 on to the substrate 11 without entailing imperfections such as the coherence of the ink 22, insufficient application and pinholes under a comparatively wide range of coating conditions including pressure for pressing the pad 21 against the substrate 11 and transfer time, when the viscosity of the protective film forming ink 22 is in the range of 0.09 to 10 Pa.s (0.9 to 100 poise), preferably 3 to 8 Pa.s (30 to 80 poise), and the Shore A hardness of the pad 21 is the range of 8 to 30. When the Shore A hardness of the pad was less than 8, the levelling performances of the pad was unsatisifactory, and there is a possibility that pinholes would be formed in the protective film; when the Shore A hardness was higher then 30, it was necessary to apply an increased pressure to the pad to transfer the ink to the substrate and the error rate increased as a result.

As is apparent from the foregoing description, the elimination of a mask simplifies the manufacturing process, the error rate is reduced, and the protective film having a matte surface facilitates labelling of the CD.

## Claims

1. A method of forming a protective film (14) on an optical recording medium (16), the method comprising the steps of:
applying a protective film forming ink (22) having a viscosity in a range of 0.09 to 10 Pa.s to a pad (21) having a Shore A hardness in the range of 8 to 30; and
pressing the pad (21) against a substrate (11) to transfer the protective film forming ink (22) to the substrate (11) thereby forming the protective film (14).

2. A method according to claim 1, including a step to cure the protective film forming ink (22) on the substrate (11).

3. A method according to claim 1 or claim 2, wherein the protective film forming ink (22) has a viscosity in a range between 3 and 8 Pa.s.

4. A method according to claim 1, claim 2 or claim 3, wherein the pad (21) has a spindle-shaped rotationally symmetric shape with respect to a centre axis (Z), or a hemispherical shape.

5. A method according to claim 4, wherein the pad (21) is pressed against the substrate (11) so that the axis (Z) coincides with a centre of the substrate (11).

## Patentansprüche

1. Verfahren zur Herstellung von Schutzschichten (14) auf optischen Aufzeichnungsmedien (16), umfassend die folgenden Stufen:
Auftragen einer schutzschichtbildenden Farbe (22) mit einer Viskosität im Bereich von 0,09 bis 10 Pa.s auf eine Unterlage (21) mit einer Shorehärte (A) im Bereich von 8 bis 30 und
Aufpressen der Unterlage (21) gegen ein Substrat (11) zum Übertragen der schutzschichtbildenden Farbe (22) auf das Substrat (11) zwecks Bildung der Schutzschicht (14).

2. Verfahren gemäß Anspruch 1, umfassend die weitere Stufe des Härtens der schutzschichtbildenden Farbe (22) auf dem Substrat (11).

3. Verfahren gemäß Anspruch 1 oder 2, wobei die schutzschichtbildende Farbe (22) eine Viskosität im Bereich zwischen 3 und 8 Pa.s hat.

4. Verfahren gemäß Anspruch 1, 2 oder 3, wobei die Unterlage (21) eine spindelförmige rotationssymmetrische Gestalt in Bezug auf die Mittelachse (Z) oder eine halbkugelige Gestalt hat.

5. Verfahren gemäß Anspruch 4, wobei die Unterlage (21) so gegen das Substrat (11) gepreßt wird, daß die Achse Z mit dem Zentrum im Substrat (11) koinzidiert.

## Revendications

1. Procédé de formation d'un film de protection comprenant les étapes de :
application d'une encre de formation de film de protection présentant une viscosité qui s'inscrit dans une plage qui va de 0,09 à 10 Pa.s sur un patin présentant une dureté Shore A qui s'inscrit dans une plage qui va de 8 à 30 ; et
pressage du patin contre un substrat pour transférer l'encre de formation de film de protection sur le substrat pour ainsi former le film de protection.

2. Procédé selon la revendication 1, incluant une étape de durcissement de l'encre de formation de film de protection (22) sur le substrat (11).

3. Procédé selon la revendication 1 ou 2, dans lequel l'encre de formation de film de protection (22) présente une viscosité qui s'inscrit dans une plage qui se situe entre 3 et 8 Pa.s.

4. Procédé selon la revendication 1, 2 ou 3, dans lequel le patin (21) présente une forme de plateau à symétrie de rotation par rapport à un axe central (Z) ou une forme hémisphérique.

5. Procédé selon la revendication 4, dans lequel le patin (21) est pressé contre le substrat (11) de telle sorte que l'axe (Z) coïncide avec un centre du substrat (11).
